# EUROPÄISCHE PATENTSCHRIFT

(11) **EP 3 455 271 B1**
(45) Veröffentlichungstag und Bekanntmachung des Hinweises auf die Patenterteilung: **10.02.2021**
(21) Anmeldenummer: 17720143.1
(22) Anmeldetag: 02.05.2017
(51) Int. Cl.: C08G 18/48, C08G 18/76, C08G 18/79, C08G 18/10, C08G 18/18, C08G 18/20, C08G 18/32

(54) **VISKOELASTISCHE SCHAUMSTOFFE MIT HOHER DICHTE**
VISCOELASTIC FOAMS WITH HIGH DENSITY
MOUSSES VISCOELASTIQUES A HAUTE DENSITE

(30) Priorität: 12.05.2016 EP 16169393
(43) Veröffentlichungstag der Anmeldung: 20.03.2019
(73) Patentinhaber: BASF SE, 67056 Ludwigshafen am Rhein (DE)
(72) Erfinder: HADICK, Udo, 48151 Muenster (DE); LUTTER, Heinz-Dieter, 49448 Huede (DE); HILLER, Stefanie, 32369 Rahden (DE); GREVER, Maike, 32351 Stemwede-Drohne (DE)
(74) Vertreter: BASF IP Association
(86) Internationale Anmeldenummer: PCT/EP2017/060325
(87) Internationale Veröffentlichungsnummer: WO 2017/194341

(56) Entgegenhaltungen:
- DE-A1- 3 942 330

## Beschreibung

Die vorliegende Erfindung betrifft ein Verfahren zur Herstellung von viskoelastischen Polyurethanschaumstoffen mit einer Dichte von 100 g/ dm³ bis 300 g/dm³, bei dem man (a) Polyisocyanat mit (b) polymeren Verbindungen mit gegenüber Isocyanaten reaktiven Gruppen, (c) gegebenenfalls Kettenverlängerungs- und/oder Vernetzungsmittel, (d) Katalysator, (e) Treibmittel, enthaltend Wasser, sowie gegebenenfalls (f) Zusatzstoffen bei einem Isocyanatindex von 50 bis 95 zu einer Reaktionsmischung vermischt, die Reaktionsmischung auf eine Unterlage gibt und zum Polyurethanweichschaumstoff umsetzt, wobei das Polyisocyanat (a) einen Isocyanatgehalt von 20 bis 31,5 % aufweist und erhältlich ist durch Vermischen von 4,4'-MDI und oligomeren des Propylenoxids mit 2 bis 8 Propylenoxideinheiten, gegebenenfalls Carbodiimid des 4,4'-MDIs und gegebenenfalls höherkernige Homologe des MDI und wobei die polymeren Verbindungen mit gegenüber Isocyanaten reaktiven Gruppen (b) (b1) 15 bis 40 Gew.-% mindestens eines Polyalkylenoxids mit einer Hydroxylzahl von 20 bis 50 mg KOH/g, ausgehend von einem 3-funktionellen Startermolekül und einem Ethylenoxydanteil, bezogen auf den Gehalt an Alkylenoxyd, von 0 bis 10 Gew.-%, und einem Anteil an primären OH-Gruppen von 50 bis 100 %, (b2) 30 bis 70 Gew.-% mindestens eines Polyalkylenoxids mit einer Hydroxylzahl von 20 bis 50 mg KOH/g, ausgehend von einem difunktionellen Startermolekül und einem Ethylenoxydanteil, bezogen auf den Gehalt an Alkylenoxyd, von 0 bis 10 Gew.-%, und einem Anteil an primären OH-Gruppen von 50 bis 100 %, (b3) 10 bis 30 Gew.-% mindestens eines Polyalkylenoxids mit einer Hydroxylzahl von 400 bis 800 mgKOH/g, ausgehend von einem 2 bis 4-funktionellen Startermolekül und einem Ethylenoxydanteil, bezogen auf den Gehalt an Alkylenoxyd, von 80 bis 100 Gew.-% und (b4) 0 bis 30 Gew.-% eines weiteren Polyalkylenoxyds, enthalten. Weiter betrifft die vorliegende Erfindung einen Polyurethanschaumstoff, erhältlich nach einem solchen Verfahren und die Verwendung einer solchen Polyurethanschaumstoffs bei der Herstellung von Matratzen oder Polsterungen für Möbel oder als Dämmung, beispielsweise in der Umgebung von Motoren, wie Verbrennungsmotoren

Viskoelastische Polyurethan-Weichschaumstoffe erlangen in den letzten Jahren eine immer größere Bedeutung. Ihr Einsatz erfolgt insbesondere zur Herstellung von Polstern, Kopfkissen, Matratzen oder zur Schwingungsdämpfung, dort beispielsweise bei der Teppichhinterschäumung oder Hohlraumausschäumung. Viskoelastische Schäume zeichnen sich nach Kompression durch ein langsames Rückstellverhalten in Ihre ursprüngliche Form aus.

Gegenwärtig werden zwei unterschiedliche Gruppen an viskoelastischen Schäumen beschrieben, die sich in ihrer Zellstruktur und im Mechanismus der Viskoelastizität unterscheiden.

Sogenannte pneumatisch (physikalisch) viskoelastische Schäume (pVE) sind geschlossenzellige PU-Weichschäume mit perforierter Zellmembran, bei denen die Luftdurchlässigkeit sehr gering ist. Wird ein solcher Schaum komprimiert, wird die Luft aus den Zellen herausgedrückt. Wird die Kompression aufgehoben, kann der Schaum nur so schnell wieder in seine Ausgangsform relaxieren, wie es die Luftdurchlässigkeit zulässt. Die Rückstellzeit ist daher unter anderem abhängig vom Grad der Perforation bzw. der Offenzelligkeit des PU-Weichschaumstoffs. Je geschlossenzelliger der PU-Weichschaum, desto langsamer die Erholung.

Viskoelastische Polyurethan-Weichschaumstoffe erlangen in den letzten Jahren eine immer größere Bedeutung. Ihr Einsatz erfolgt insbesondere zur Herstellung von Polstern, Kopfkissen, Matratzen oder zur Schwingungsdämpfung, dort beispielsweise bei der Teppichhinterschäumung oder Hohlraumausschäumung. Viskoelastische Schäume zeichnen sich nach Kompression durch ein langsames Rückstellverhalten in Ihre ursprüngliche Form aus.

Gegenwärtig werden zwei unterschiedliche Gruppen an viskoelastischen Schäumen beschrieben, die sich in ihrer Zellstruktur und im Mechanismus der Viskoelastizität unterscheiden.

Sogenannte pneumatisch (physikalisch) viskoelastische Schäume (pVE) sind geschlossenzellige PU-Weichschäume mit perforierter Zellmembran, bei denen die Luftdurchlässigkeit sehr gering ist. Wird ein solcher Schaum komprimiert, wird die Luft aus den Zellen herausgedrückt. Wird die Kompression aufgehoben, kann der Schaum nur so schnell wieder in seine Ausgangsform relaxieren, wie es die Luftdurchlässigkeit zulässt. Die Rückstellzeit ist daher unter anderem abhängig vom Grad der Perforation bzw. der Offenzelligkeit des PU-Weichschaumstoffs. Je geschlossenzelliger der PU-Weichschaum, desto langsamer die Erholung.

Die pneumatisch viskoelastischen Polyurethanschaumstoffe haben den Nachteil, dass die hohe Geschlossenzelligkeit nur einen sehr geringen Luftaustausch zulässt. Ohne diesen Luftaustausch kann weder Wärme z.B. vom menschlichen Körper abgeführt werden , was zu vermehrtem Schwitzen führt, noch feuchte Luft z.B. vom Schweiß des menschlichen Körpers oder vom Waschprozess abtransportiert werden. Weiter gehen die Viskoelastischen Eigenschaften oft auch mit der Zeit verloren, da die Zellmembranen nach einer gewissen Zeit nicht mehr in der Lage sind, den Luftaustausch im erforderlichen Maß zu regulieren.

Sogenannte struktur-, oder chemisch viskoelastische Polyurethan-Weichschaumstoffe (cVE) zeichnen sich dadurch aus, dass ihre Glasübergangstemperatur in der Nähe der Gebrauchstemperatur liegt. Solche cVE-Schäume können offenzellig und trotzdem viskoelastisch sein.

Die Einstellung der Rückstellzeit erfolgt hier durch die Verwendung einer speziellen Polyetherpolyol-Zusammensetzung neben einer mehr oder weniger frei wählbaren Isocyanatkomponente. Insbesondere für den besonderen Liegekomfort bei Matratzen und Kopfkissen ist ein offenzelliger Schaum von Vorteil, weil dadurch ein Luftaustausch möglich wird und ein verbessertes Mikroklima erreicht wird. Auch nehmen die Viskoelastischen Eigenschaften des Schaumstoffs nicht mit der Zeit ab.

Ein solcher chemisch viskoelastischer Polyurethanschaumstoff ist beispielsweise in DE 3710731 beschrieben. Dieser weist eine hohe Adhesivität auf. Zu dessen Herstellung wird ein Isocyanatprepolymer mit im Überschuss vorliegenden Polyolen bei einem Isocyanatindex von vorzugsweise kleiner oder gleich 70 verschäumt. Im Beispiel wird ein Polyurethanschaumstoff mit einer Dichte von 120 g/dm³ beschrieben. Wie genau diese Schaumstoffe herzustellen sind und bei welcher Temperatur die angegebenen Verlustfaktoren in den Beispielen bestimmt wurden, ist nicht offenbart.

DE 3942330 offenbart einen viskoelastischer Polyurethanschaumstoff, erhalten durch die Umsetzung von Blockpolyoxypropylen-polyoxyethylen-polyolgemisch mit einer Hydroxylzahl von 14 bis 65 und einem Gehalt an endständig gebundenen Ethylenoxideinheiten von 2 bis 9 Gew.-%, bezogen auf das Gewicht der Polyoxypropyleneinheiten, das hergestellt wurde durch anionische Polymerisation bei erhöhten Temperaturen von 1,2-Propylenoxid an eine Startermolekülmischung mit einer durchschnittlichen Funktionalität von 2,3 bis 2,8 aus Wasser und Glycerin und/oder Trimethylolpropan und Polymerisation von Ethylenoxid an das erhaltene Polyoxypropylenaddukt und aii) mindestens einem di- und/oder trifunktionellen Polyoxypropylen-polyoxyethylen-polyol mit einem Gehalt an Oxethyleneinheiten von 60 bis 85 Gew.-%, bezogen auf das Gesamtgewicht an polymerisierten Alkylenoxideinheiten, und einer Hydroxylzahl von 20 bis 80 mit Polyisocyanaten. Dadurch werden viskoelastische Polyurethanschaumstoffe erhalten, die über einen weiten Temperaturbereich von -20 °C bis +80 °C viskoelastische Eigenschaften zeigen. Die Schaumstoffe aus den Beispielen zeigen Dichten im Bereich von 70 bis 77 g/dm³.

Ein wesentlicher Nachteil bekannter chemisch viskoelastischer Polyurethanschaumstoffe ist die Temperaturabhängigkeit der Viskoelastizität, da diese meist nur in einem kleinen Bereich oberhalb der Glastemperatur auftritt. Ein weiterer Nachteil ist, dass ein hoher Wasseranteil bei der Herstellung der viskoelastischen Schaumstoffe eingesetzt werden muss, da die dadurch erhaltenen Harnstoffbindungen die Viskoelastizität positiv beeinflussen. Durch den hohen Wassereinsatz werden meist Schaumstoffe mit Dichten von weniger als 100 g/dm³ erhalten. Da viele mechanischen Eigenschaften, wie Zugfestigkeit und Weiterreißfestigkeit aber auch der Druckverformungsrest von der Dichte abhängig sind, war es nur begrenzt möglich, viskoelastische Polyurethanschaumstoffe mit guten mechanischen Eigenschaften zu erhalten. Darüber hinaus führt ein hoher Harnstoffgehalt zu relativ hohen Härten des Schaumstoffs.

Aufgabe der vorliegenden Erfindung war es einen viskoelastischen Polyurethanschaumstoff mit einer Dichte von 100 bis 300 g/dm³ zu erhalten, der hervorragende mechanische Eigenschaften aufweist und über einen großen Temperaturbereich viskoelastische Eigenschaften zeigt.

Diese Aufgabe wurde gelöst durch ein Verfahren zur Herstellung von viskoelastischen Polyurethanschaumstoffen mit einer Dichte von 100 g/ dm³ bis 300 g/dm³, bei dem man (a) Polyisocyanat mit (b) polymeren Verbindungen mit gegenüber Isocyanaten reaktiven Gruppen, (c) gegebenenfalls Kettenverlängerungs- und/oder Vernetzungsmittel, (d) Katalysator, (e) Treibmittel, enthaltend Wasser, sowie gegebenenfalls (f) Zusatzstoffen bei einem Isocyanatindex von 50 bis 95 zu einer Reaktionsmischung vermischt, die Reaktionsmischung auf eine Unterlage, beispielsweise in eine Form, gibt und zum Polyurethanweichschaumstoff umsetzt, wobei das Polyisocyanat (a) einen Isocyanatgehalt von 20 bis 31,5 % aufweist und erhältlich ist durch Vermischen von 4,4'-MDI und oligomeren des Propylenoxids mit 2 bis 8 Propylenoxideinheiten, gegebenenfalls Carbodiimid des 4,4'-MDIs und gegebenenfalls höherkernige Homologe des MDI und wobei die polymeren Verbindungen mit gegenüber Isocyanaten reaktiven Gruppen (b) (b1) 15 bis 40 Gew.-% mindestens eines Polyalkylenoxids mit einer Hydroxylzahl von 20 bis 50 mg KOH/g, ausgehend von einem 3-funktionellen Startermolekül und einem Ethylenoxydanteil, bezogen auf den Gehalt an Alkylenoxyd, von 0 bis 10 Gew.-%, und einem Anteil an primären OH-Gruppen von 50 bis 100 %, (b2) 30 bis 70 Gew.-% mindestens eines Polyalkylenoxids mit einer Hydroxylzahl von 20 bis 50 mg KOH/g, ausgehend von einem difunktionellen Startermolekül und einem Ethylenoxydanteil, bezogen auf den Gehalt an Alkylenoxyd, von 0 bis 10 Gew.-%, und einem Anteil an primären OH-Gruppen von 50 bis 100 %, (b3) 10 bis 30 Gew.-% mindestens eines Polyalkylenoxids mit einer Hydroxylzahl von 400 bis 800 mgKOH/g, ausgehend von einem 2 bis 4-funktionellen Startermolekül und einem Ethylenoxydanteil, bezogen auf den Gehalt an Alkylenoxyd, von 80 bis 100 Gew.-% und (b4) 0 bis 30 Gew.-% eines weiteren Polyalkylenoxyds, enthalten.

Weiter betrifft die vorliegende Erfindung einen viskoelastischen Polyurethanschaumstoff, erhältlich nach einem solchen Verfahren sowie die Verwendung eines erfindungsgemäßen Polyurethanschaumstoffs bei der Herstellung von Matratzen oder Polysterelements, beispielsweise für Möbelstücke oder im Automobilbereich, wie Autositze oder Arm- bzw. Kopfstützen oder als Dämmung, beispielsweise in der Umgebung von Motoren, wie Verbrennungsmotoren.

Unter einem viskoelastischen Polyurethanschaumstoff wird im Rahmen dieser Erfindung ein Polyurethanweichschaumstoff verstanden, der auf einer Unterlage, beispielsweise auf einem Band oder in einer offenen oder geschlossenen Form, hergestellt wurde. Ist der Polyurethanschaumstoff in einer Form hergestellt spricht man von einem Polyurethanformschaumstoff. Vorzugsweise weist der Polyurethanformschaumstoff in der Randzone eine höhere Dichte als im Kern auf. In vielen Fällen ist die Randzone der erfindungsgemäßen Polyurethanformweichschaumstoffe weniger als 1 mm dick, vorzugsweise weniger als 0,5 mm dick. Die über den Kern und die Randzone gemittelte Gesamtrohdichte liegt dabei im Bereich von 100 g/dm³ bis 300 g/dm³, vorzugsweise von 120 g/dm³bis 250 g/dm³, besonders bevorzugt von 140 g/dm³ bis 220 g/dm³ und insbesondere von 150 g/dm³ bis 200 g/dm³.

Die erfindungsgemäßen viskoelastischen Polyurethanschaumstoffe weisen eine Rückprallelastizitat nach DIN EN ISO 8307 bei 20 °C von unter 30 %, besonders bevorzugt weniger als 20 % und insbesondere weniger als 15 % auf. Weiter weisen die erfindungsgemäßen Polyurethanformschaumstoffe ein hohes Dämpfungsverhalten auf, welches sich durch einen Wert für tan delta im Bereich von -40 bis + 40 °C größer als 0,15 im Dichtebereich von 100 bis 300g/dm³ ausdrückt. Dabei wird der tan delta mittels dynamisch-mechanischer Analyse (DMA) bei einer Frequenz von 1 Hz und einem Temperaturbereich von - 80 bis + 200°C bei einer Deformation von 0,3 % in Anlehnung an DIN EN ISO 6721-1, DIN EN ISO 6721-2, DIN EN ISO 6721-7 bestimmt. Das Temperaturprogramm wird in 5°C-Schritten durchgeführt.

Vorzugsweise weist der erfindungsgemäße Polyurethanschaum viskoelastisches Verhalten über einen breiten Temperaturbereich auf. Dabei beträgt die Rückprallelastizität nach DIN EN ISO 8307 im Temperaturbereich von vorzugsweise 0 bis 60 °C, besonders bevorzugt 10 bis 50 und insbesondere 15 bis 40 °C maximal 20 %.

Die zur Herstellung der erfindungsgemäßen Polyurethanschaumstoffe eingesetzten Polyisocyanate (a) weisen einen Isocyanatgehalt von 20 bis 31,5 Gew.-%, vorzugsweise 25 bis 30 Gew.-% auf. Dabei ist das Polyisocyanat (a) erhältlich durch Vermischen von (a1) 4,4'-Diphenylmethandiisocyanat (im Folgenden auch als 4,4'-MDI bezeichnet) und (a2) oligomeren des Propylenoxids mit 2 bis 8, vorzugsweise 2 bis 6, Propylenoxideinheiten, gegebenenfalls (a3) Carbodiimid des 4,4'-MDIs und gegebenenfalls (a4) höherkernige Homologe des Diphenylmethandiisocyanats (MDI) enthält. Dabei ist die Reihenfolge der Zugabe der Mischungsbestandteile zur Mischung nicht beschränkt. Vorzugsweise solle aber so verfahren werden, dass immer ein stöchiometrischer Überschuss an Isocyanatgruppen vorliegt. So kann beispielsweise auch das Carbodiimid des 4,4' MDI auch nach vollständiger Umsetzung der OH-Gruppen des oligomeren Propylenoxids mit Isocyanatgruppen zugegeben werden. Dabei beträgt vorzugsweise der Anteil von 4,4'-MDI (a1), 50 bis 95 Gew.-%, besonders bevorzugt 60 bis 90 Gew.-%, der Anteil der Oligomere des Propylenoxids (a2) 1 bis 15 Gew.-%, besonders bevorzugt 5 bis 12 Gew.-%, der Anteil des Corbodiimids (a3) 0 bis 15 Gew.-%, besonders bevorzugt 5 bis 12 Gew.-% und der Anteil der höherkernigen Homologen des MDI (a4) 0 bis 15 Gew.-%, besonders bevorzugt 5 bis 12 Gew.-%, jeweils bezogen auf das Gesamtgewicht der Polyisocyanate (a). Dabei werden in einer besonders bevorzugten Ausführungsform entweder Carbodiimid oder höherkernige Homologe des MDI eingesetzt. In einer ganz bevorzugten Ausführungsform werden neben den Polyisocyanaten (a) weniger als 10 Gew.-%, bezogen auf das Gesamtgeicht der Polyisocyanate (a) weiteren Isocyanatgruppenhaltigen Verbindungen und weiter bevorzugt keine weiteren Isocyanatgruppenhaltigen Verbindungen in der Komponente a) enthalten sind.

Polymere Verbindungen mit gegenüber Isocyanat reaktiven Gruppen (b) weisen ein zahlenmittleres Molekulargewicht von mindestens 450 g/mol, besonders bevorzugt 460 bis 12000 g/mol auf und weisen mindestens zwei gegenüber Isocyanat reaktive Wasserstoffatome pro Molekül auf. Als polymere Verbindungen mit gegenüber Isocyanat reaktiven Gruppen (b) kommen bevorzugt Polyesteralkohole, und/oder Polyetheralkohole mit einer Funktionalität von 2 bis 8, insbesondere von 2 bis 6, vorzugsweise von 2 bis 4 und einem mittleren Equivalentmolekulargewicht im Bereich von 400 bis 3000 g/mol, vorzugsweise 1000 bis 2500 g/mol, in Betracht. Insbesondere werden Polyetheralkohole eingesetzt.

Die Polyetheralkohole können nach bekannten Verfahren, zumeist durch katalytische Anlagerung von Alkylenoxiden, insbesondere Ethylenoxid und/oder Propylenoxid, an H-funktionelle Startsubstanzen, oder durch Kondensation von Tetrahydrofuran, hergestellt werden. Bei Anlagerung von Alkylenoxyden spricht man auch von Polyalkylenoxydpolyolen. Als H-funktionelle Startsubstanzen kommen insbesondere mehrfunktionelle Alkohole und/oder Amine zum Einsatz. Bevorzugt eingesetzt werden Wasser, zweiwertige Alkohole, beispielsweise Ethylenglykol, Propylenglykol, oder Butandiole, dreiwertige Alkohole, beispielsweise Glycerin oder Trimethylolpropan, sowie höherwertige Alkohole, wie Pentaerythrit, Zuckeralkohole, beispielsweise Sucrose, Glucose oder Sorbit. Bevorzugt eingesetzte Amine sind aliphatische Amine mit bis zu 10 Kohlenstoffatomen, beispielsweise Ethylendiamin, Diethylentriamin, Propylendiamin, sowie Aminoalkohole, wie Ethanolamin oder Diethanolamin. Als Alkylenoxide werden vorzugsweise Ethylenoxid und/oder Propylenoxid eingesetzt, wobei bei Polyetheralkoholen, die für die Herstellung von Polyurethan-Weichschäumen verwendet werden, häufig am Kettenende ein Ethylenoxidblock angelagert wird. Als Katalysatoren bei der Anlagerung der Alkylenoxide kommen insbesondere basische Verbindungen zum Einsatz, wobei hier das Kaliumhydroxid die größte technische Bedeutung hat. Wenn der Gehalt an ungesättigten Bestandteilen in den Polyetheralkoholen gering sein soll, können als Katalysatoren auch Di- oder Multimetallcyanidverbindungen, sogenannte DMC-Katalysatoren, eingesetzt werden. Zur Herstellung von viskoelastischen Polyurethanweichschaumstoffen werden insbesondere zwei- und/oder dreifunktionelle Polyalkylenoxydpolyole eingesetzt.

Weiter können als Verbindung mit mindestens zwei aktiven Wasserstoffatomen Polyesterpolyole, beispielsweise herstellbar aus organischen Dicarbonsäuren mit 2 bis 12 Kohlenstoffatomen, vorzugsweise aliphatischen Dicarbonsäuren mit 8 bis 12 Kohlenstoffatomen und mehrwertigen Alkoholen, vorzugsweise Diolen, mit 2 bis 12 Kohlenstoffatomen, vorzugsweise 2 bis 6 Kohlenstoffatomen, eingesetzt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure, Terephthalsäure und die isomeren Naphthalindicarbonsäuren. Vorzugsweise wird Adipinsäure eingesetzt. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden.

Beispiele für zwei- und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyesterpolyole aus Lactonen, z.B. ε-Caprolacton oder Hydroxycarbonsäuren, z.B. ω-Hydroxycapronsäure und Hydroxybenzoesäuren. Vorzugsweise eingesetzt wird Dipropylenglykol.

Dabei enthalten die polymere Verbindungen mit gegenüber Isocyanat reaktiven Gruppen (b) 15 bis 40 Gew.-%, vorzugsweise 20 bis 35 Gew.-%, bezogen auf das Gesamtgewicht der Komponente (b), mindestens eines Polyalkylenoxids mit einer Hydroxylzahl von 20 bis 50 mg KOH/g, vorzugsweise 35 bis 45 mg KOH/g, ausgehend von einem 3-funktionellen Startermolekül und einem Ethylenoxydanteil, bezogen auf den Gehalt an Alkylenoxyd, von 0 bis 10 Gew.-%, vorzugsweise 4 bis 8 Gew.-%; besonders bevorzugt 5,5 bis 6,5 Gew.-%, und einem Anteil an primären OH-Gruppen von 50 bis 100, vorzugsweise 70 bis 100 und besonders bevorzugt 90 bis 100, bezogen auf die Anzahl an OH-Gruppen in der Verbindung (b1). Dabei wird im Rahmen der Erfindung unter einem Ethylenoxidanteil eines Polyethers der Anteil an [CH₂-CH₂-O]- Struktureinheiten im Polyalkylenoxid verstanden. Analoge Definitionen gelten für den Propylenoxydanteil und die weiteren, eingesetzten Alkylenoxide.

Weiter enthalten die polymere Verbindungen mit gegenüber Isocyanat reaktiven Gruppen (b) 30 bis 70 Gew.-%, vorzugsweise 45 bis 60 Gew.-%, bezogen auf das Gesamtgewicht der Komponente (b), mindestens eines Polyalkylenoxids mit einer Hydroxylzahl von 20 bis 50 mg KOH/g,mindestens eines Polyalkylenoxids mit einer Hydroxylzahl von 20 bis 50 mg KOH/g, vorzugsweise 35 bis 45 mg KOH/g, ausgehend von einem difunktionellen Startermolekül und einem Ethylenoxydanteil, bezogen auf den Gehalt an Alkylenoxyd, von 0 bis 10 Gew.-%, vorzugsweise 4 bis 8 Gew.-% und besonders bevorzugt 5,5 bis 6,5 Gew.-%, und einem Anteil an primären OH-Gruppen von 50 bis 100, vorzugsweise 70 bis 100 und besonders bevorzugt 90 bis 100, bezogen auf die Anzahl an OH-Gruppen in der Verbindung (b2).

In einer bevorzugten Ausführungsform beträgt das Gewichtsverhältnis der Polyole (b1) und (b2) 1 : 1,5 bis 1 : 2,5 und besonders bevorzugt 1 : 1,8 bis 1 : 2,2.

Dabei können als dreifunktionelle Starter vorzugsweise Glycerin oder Trimethylolpropan, besonders bevorzugt Glycerin und als difunktionelle Starter Wasser, zweiwertige Alkohole, beispielsweise Ethylenglykol, Propylenglykol, oder Butandiole, vorzugsweise Wasser, eingesetzt. Die Starter können dabei alleine oder in Mischungen eingesetzt werden. In einer besonders bevorzugten Ausführungsform werden die Polyole (b1) und (b2) ausgehend von einer Mischungder dreifunktionellen und der difunktionellen Startersubstanzen hergestellt. Diese Mischung Startersubstanzen werden dann vorzugsweise wie oben beschrieben unter Zuhilfenahme basischer Katalysatoren oder DMC-Katalysatoren alkoxyliert. Dabei wird üblicherweise in einem ersten Schritt die Startermischung mit Propylenoxid umgesetzt und in einem zweiten Schritt Ethylenoxid zur Erzeugung der primären OH-Gruppen am Ende der Reaktion zugegeben.

Besonders bevorzugt wird dabei eine Mischung aus Glycerin und Wasser eingesetzt, wobei das Gewichtsverhältnis von Glycerin zu Wasser vorzugsweise 1 : 1,5 bis 1 : 2,5 und besonders bevorzugt 1 : 1,8 bis 1 : 2,2 beträgt.

Neben den Polyolen (b1) und (b2) werden 10 bis 30 Gew.-%, bezogen auf das Gesamtgewicht der Komponente (b), mindestens eines Polyalkylenoxids mit einer Hydroxylzahl von 20 bis 50 mg KOH/g, mindestens eines Polyalkylenoxids (b3) mit einer Hydroxylzahl von 400 bis 800 mg KOH/g, vorzugsweise 450 bis 650 mgKOH/g, ausgehend von einem 2 bis 4-funktionellen, vorzugsweise trifunktionellen Startermolekül und einem Ethylenoxydanteil, bezogen auf den Gehalt an Alkylenoxyd, von 80 bis 100 Gew.-%, vorzugsweise 90 bis 100 Gew.-% und insbesondere 100 Gew.-% eingesetzt.

Neben den Polyetheralkoholen (b1), (b2) und (b3) können 0 bis 30 Gew.-%, vorzugsweise 0 bis 15 Gew.-%, besonders bevorzugt 0 bis 5 Gew.-% und insbesondere keine weiteren polymeren Verbindungen mit gegenüber Isocyanaten reaktiven Gruppen eingesetzt werden. Vorzugsweise handelt es sich dabei um ein Polyetheralkohol (b4).

Polyetheralkohole (b4) umfassen neben den oben beschriebenen traditionellen Polyetherolen auch füllstoffhaltige Polyetherole, auch als Polymerpolyetherole bezeichnet. Solche Verbindungen enthalten vorzugsweise dispergierte Partikel aus thermoplastischen Kunststoffen, beispielsweise aufgebaut aus olefinischen Monomeren, wie Acrylnitril, Styrol, (Meth)Acrylaten, (Meth)Acrylsäure und/oder Acrylamid. Solche Füllstoffhaltigen Polyole sind bekannt und kommerziell erhältlich. Ihre Herstellung ist beispielweise beschrieben in DE 111 394, US 3 304 273, US 3 383 351, US 3 523 093, DE 1 152 536, DE 1 152 537 WO 2008/055952 und WO2009/128279.

Als Kettenverlängerungsmittel und/oder Vernetzungsmittel (c) werden Substanzen mit einem Molekulargewicht von kleiner 400 g/mol, bevorzugt von 60 bis 350 g/mol eingesetzt, wobei Kettenverlängerer 2 gegenüber Isocyanaten reaktive Wasserstoffatome und Vernetzungsmittel mindestens 3 gegenüber Isocyanat reaktive Wasserstoffatome aufweisen. Diese können einzeln oder in Form von Mischungen eingesetzt werden. Vorzugsweise werden Diole und/oder Triole mit Molekulargewichten kleiner als 400, besonders bevorzugt von 60 bis 300 und insbesondere 60 bis 150 eingesetzt. In Betracht kommen beispielsweise aliphatische, cycloaliphatische und/oder aromatische Diole, sowie Diole mit aromatischen Strukturen, mit 2 bis 14, vorzugsweise 2 bis 10 Kohlenstoffatomen, wie Ethylenglykol, 1,3-Propandiol, 1,10-Decandiol, o-, m-, p-Dihydroxycyclohexan, Diethylenglykol, Dipropylenglykol und vorzugsweise 1,4-Butandiol, 1,6-Hexandiol und Bis-(2-hydroxyethyl)-hydrochinon, Triole, wie 1,2,4-, 1,3,5-Trihydroxy-cyclohexan, Glycerin und Trimethylolpropan, und niedermolekulare hydroxylgruppenhaltige Polyalkylenoxide auf Basis Ethylen- und/oder 1,2-Propylenoxid und den vorgenannten Diolen und/oder Triolen als Startermoleküle. Besonders bevorzugt werden als Kettenverlängerer (c) Monoethylenglycol, 1,4-Butandiol und/oder Glycerin eingesetzt. Sofern Kettenverlängerungsmittel, Vernetzungsmittel oder Mischungen davon Anwendung finden, kommen diese zweckmäßigerweise in Mengen von 0,1 bis 20 Gew.-%, vorzugsweise 0,5 bis 10 Gew.-% und insbesondere 0,8 bis 5 Gew.-%, bezogen auf das Gewicht der Komponenten (b) und (c) zum Einsatz.

Als Katalysatoren (d) zur Herstellung der viskoelastischen Polyurethanschaumstoffe werden bevorzugt Verbindungen verwendet, welche die Reaktion der Hydroxylgruppen enthaltenden Verbindungen der Komponente (b) und (c) mit den Polyisocyanaten (a) und/oder die Reaktion der Isocyanate mit Wasser stark beschleunigen. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl- und N-Ethyl-diethanolamin und Dimethylethanolamin. Ebenso kommen in Betracht organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinndilaurat, Dibutylzinn-maleat und Dioctylzinn-diacetat, sowie Bismutcarboxylate, wie Bismut(III)-neodecanoat, Bismut-2-ethylhexanoat und Bismut-octanoat oder Mischungen davon. Die organischen Metallverbindungen können allein oder vorzugsweise in Kombination mit stark basischen Aminen eingesetzt werden.

Vorzugsweise werden ausschließlich Aminkatalysatoren als Katalysatoren (d) eingesetzt. Vorzugsweise verwendet werden 0,001 bis 5 Gew.%, insbesondere 0,05 bis 2 Gew.% Katalysator bzw. Katalysatorkombination, bezogen auf das Gewicht der Komponente (b).

Ferner sind bei der Herstellung von Polyurethanschaumstoffen ein oder mehrere Treibmittel (e) zugegen. Als Treibmittel (e) können chemisch wirkende Treibmittel und/oder physikalisch wirkende Verbindungen eingesetzt werden. Unter chemischen Treibmitteln versteht man Verbindungen, die durch Reaktion mit Isocyanat gasförmige Produkte bilden, wie beispielsweise Wasser oder Ameisensäure. Unter physikalischen Treibmitteln versteht man Verbindungen, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe, und andere Verbindungen, wie zum Beispiel perfluorierte Alkane, wie Perfluorhexan, Fluorchlorkohlenwasserstoffe, und Ether, Ester, Ketone und/oder Acetale, beispielsweise (cyclo)aliphatische Kohlenwasserstoffe mit 4 bis 8 Kohlenstoffatomen, Fluorkohlenwasserstoffe, wie Solkane® 365 mfc, oder Gase, wie Kohlendioxid. In einer bevorzugten Ausführungsform wird als Treibmittel eine Mischung dieser Treibmittel, enthaltend Wasser, besonders bevorzugt ausschließlich Wasser, eingesetzt.

Der Gehalt an physikalischen Treibmitteln (e), wenn vorhanden, liegt in einer bevorzugten Ausführungsform im Bereich zwischen 1 und 20 Gew.-%, insbesondere 5 und 20 Gew.-%, die Menge an Wasser vorzugsweise im Bereich zwischen 0,1 und 2,0 Gew.-%, besonders bevorzugt zwischen 0,3 und 1,0 Gew.-% und insbesondere zwischen 0,5 und 0,8 Gew.-%, jeweils bezogen auf das Gesamtgewicht der Komponenten (a) bis (e).

Als Hilfsmittel und/oder Zusatzstoffe (f) werden beispielsweise oberflächenaktive Substanzen, Schaumstabilisatoren, Zellregler, äußere und innere Trennmittel, Füllstoffe, Pigmente, Farbstoffe, Flammschutzmittel, Antistatika, Hydrolyseschutzmittel sowie fungistatisch und bakteristatisch wirkende Substanzen eingesetzt.

Weitere Angaben über die verwendeten Ausgangsstoffe finden sich beispielsweise im Kunststoffhandbuch, Band 7, Polyurethane, herausgegeben von Günter Oertel, Carl-Hanser-Verlag, München, 3. Auflage 1993, Kapitel 5, Polyurethanweichschaumstoffe.

Bei der Herstellung der erfindungsgemäßen viskoelastischen Polyurethanschaumstoffe werden üblicherweise die polymeren Verbindungen mit gegenüber Isocyanaten reaktiven Gruppen (b), die gegebenenfalls eingesetzten Kettenverlängerungs- und/oder Vernetzungsmittel (c), die Katalysatoren (d), die Treibmittel (e), sowie die gegebenenfalls mit verwendeten Hilfsmittel und/oder Zusatzstoffe (f) zu einer sogenannten Polyolkomponente vermischt und in dieser Form mit den Polyisocyanaten a) zur Umsetzung gebracht.

Zur Herstellung der erfindungsgemäßen viskoelastischen Polyurethanschaumstoffe werden die Polyisocyanatprepolymere mit den polymeren Verbindungen mit gegenüber Isocyanaten reaktiven Gruppen im Beisein der genannten Treibmittel, Katalysatoren und Hilfs- und/oder Zusatzstoffe (Polyolkomponente) zur Reaktion gebracht. Dabei werden die Mischungsverhältnisse so gewählt, dass das Äquivalenz-Verhältnis von NCO-Gruppen der Polyisocyanate (a) zur Summe der reaktiven Wasserstoffatome der Komponenten (b) und (f) sowie, falls vorhanden, (c) und (d) vorzugsweise 0,5 bis 0,95 zu 1, vorzugsweise 0,6 bis 0,8 zu 1 und insbesondere 0,65 bis 0,75 zu 1 beträgt. Ein Verhältnis von 1 zu 1 entspricht dabei einem Isocyanatindex von 100.

Die Herstellung der erfindungsgemäßen Polyurethan-Schaumstoffe erfolgt vorzugsweise nach dem one-shot-Verfahren, beispielsweise mit Hilfe der Hochdruck- oder Niederdrucktechnik. Dabei werden die erfindungsgemäßen Schaumstoffe beispielsweise auf einem Band oder vorzugsweise in einer Form hergestellt. Die Polyurethanformschaumstoffe können in offenen oder geschlossenen, beispielsweise metallischen Formwerkzeugen hergestellt werden.

Besonders vorteilhaft ist es, nach dem sogenannten Zweikomponentenverfahren zu verfahren, bei dem, wie oben ausgeführt, eine Polyolkomponente hergestellt und mit Polyisocyanat a) verschäumt wird. Die Komponenten werden vorzugsweise bei einer Temperatur im Bereich zwischen 15 bis 120 °C, vorzugsweise 20 bis 80 °C vermischt und in das Formwerkzeug beziehungsweise auf die Bandstraße gebracht. Die Temperatur im Formwerkzeug liegt zumeist im Bereich zwischen 15 und 120 °C, vorzugsweise zwischen 30 und 80 °C. Der so erhaltene Polyurethanformschaumstoff ist ebenfalls Gegenstand der vorliegenden Erfindung. Dieser ist offenzellig und kann ohne Walken verwendet werden. Auch weist er eine klebefreie Oberfläche auf wodurch die Arbeitsplatzhygiene und die Verbraucherakzeptanz, insbesondere im Bereich Möbel und Matratzen, verbessert wird.

Erfindungsgemäße Polyurethanschäume werden vorzugsweise für dämmende und dämpfende Elemente, insbesondere im Fahrzeugbau, beispielsweise als Teppichrückseitenbeschichtung, für Polster-, Sitz- oder Liegemöbel, für Matratzen oder Kissen, beispielsweise im orthopädischen und/oder medizinischen Bereich, oder für Schuheinlegesohlen eingesetzt. Damit eignen s Ein weiteres Einsatzgebiet sind Autosicherheitsteile, Auflageflächen, Armlehnen und ähnliche Teile im Möbelbereich und im Automobilbau. Weiterhin werden viskoelastische Bauteile zur Schalldämmung und -dämpfung eingesetzt. Besonders bevorzugt werden die erfindungsgemäßen Polyurethanweichschaumstoffe für Matratzen und Kissen eingesetzt.

Die erfindungsgemäßen viskoelastischen Polyurethanschaumstoffe zeichnen sich durch hervorragende mechanische Eigenschaften, insbesondere hervorragende Werte für die Zugfestigkeit und die Bruchdehnung aus. Gleichzeitig weisen die erfindungsgemäßen viskoelastischen Polyurethanschaumstoffe hervorragende Luftdurchlässigkeiten. Überraschenderweise zeigen die erfindungsgemäßen Polyurethanschaumstoffe, insbesondere Polyurethanformschaumstoffe, neben hervorragenden mechanischen Eigenschaften viskoelastische Eigenschaften über einen breiten Temperaturbereich und eine hervorragende Temperaturstabilität. Dies ermöglicht die Herstellung beispielsweise von Matratzen mit viskoelastischen Eigenschaften unabhängig von der Raumtemperatur und damit im Sommer wie im Winter gleichbleibenden Komforteigenschaften. Weiter ermöglicht die temperaturunabhängige Viskoelastizität und die hohe Temperaturbeständigkeit auch den Einsatz der erfindungsgemäßen Schaumstoffe in einer heißen Umgebung, beispielsweise bei der Schallisolierung in unmittelbarer Umgebung von heißen Maschinenteilen, wie im Motorraum von Automobilen. Dieser Einsatz wird weiter begünstigt durch seine guten Alterungseigenschaften, selbst bei hohen Temperaturen

Im Folgenden soll die Erfindung anhand von Beispielen verdeutlicht werden.

### Erfindungsgemäße Beispiele

Zur Ermittlung der mechanischen Eigenschaften wurden in einer geschlossenen Form Prüfplatten von 18,5 x 19,5 x 3,8 cm hergestellt. Dabei wurde eine Polyolkomponente gemäß Tabelle 1 hergestellt, in einem Hochdruckmischkopf bei 35 °C mit der angegebenen Isocyanatkomponente bei einem Isocyanatindex von 65 vermischt und in die auf 60 °C temperierte Form gegeben. Nach 5 Minuten wurde das Formteil entformt. Dabei wurden die folgenden Einsatzstoffe verwendet:
Polyol 1: Polyalkylenoxid, erhältlich durch Alkoxylierung von einer Mischung aus Glycerin und Wasser als Startermoleküle im Molverhältnis von 1 : 2. Der Mischpolyether weist eine Hydroxylzahl von 30 mg KOH/g, einen Ethylenoxydanteil, bezogen auf den Gehalt an Alkylenoxyd, von 6 Gew.-% und einem Anteil an primären OH-Gruppen, bezogen auf die Gesamtzahl der OH-Gruppen im Polyol 1 von 68% auf.
Polyol 2: Polyalkylenoxid, erhältlich durch Ethoxylierung von Trimethylolpropan als Startermolekül mit einer Hydroxylzahl von 600 mg KOH/g, einen Ethylenoxydanteil, bezogen auf den Gehalt an Alkylenoxyd, von 100 Gew.-% und einem Anteil an primären OH-Gruppen, bezogen auf die Gesamtzahl der OH-Gruppen im Polyol 2 von 100%
Polyol 3 Polyalkylenoxid, erhältlich durch Alkoxylierung von Glycerin als Startermolekül mit einer Hydroxylzahl von 35 mg KOH/g, einen Ethylenoxydanteil, bezogen auf den Gehalt an Alkylenoxyd, von 14 Gew.-% und einem Anteil an primären OH-Gruppen, bezogen auf die Gesamtzahl der OH-Gruppen im Polyol 3 von 72%
Polyol 4: Polyalkylenoxid, erhältlich durch Ethoxylierung von Trimethylolpropan als Startermolekül mit einer Hydroxylzahl von 935 mg KOH/g, einen Ethylenoxydanteil, bezogen auf den Gehalt an Alkylenoxyd, von 100 Gew.-% und einem Anteil an primären OH-Gruppen, bezogen auf die Gesamtzahl der OH-Gruppen im Polyol 4 von 100%
Polyol 5: Polyetherol, erhältich durch Alkoxylierung von Glycerin als Startermolekül mit einer Hydroxylzahl von 42 mg KOH/g, einen Ethylenoxydanteil, bezogen auf den Gehalt an Alkylenoxyd, von 72,5 Gew.-% von denen 5 % als Block endständig und die restlichen Ethylenoxideinheiten in statistischer Verteilung mittelständig gebunden sind.
Polyol 6: Polyetherol, erhältich durch Alkoxylierung von Glycerin als Startermolekül mit einer Hydroxylzahl von 28 mg KOH/g, einen endständig gebundenen Ethylenoxydanteil, bezogen auf den Gehalt an Alkylenoxyd, von 14 Gew.-%.

| | |
|---|---|
| Kat. 1: | Bis(dimethylaminoethyl)ether (70% in Dipropylenglycol |
| Kat. 2: | Triethylendiamin (33%in MEG) |
| Stab: | Siloxan-Stabilisator der Firma Evonik |

Iso 1: Prepolymer aus 87Gew-% 4,4'MDI und 8 Gew.-% Dipropylenglykol und 5 Gew.-% Polypropylenglykol; NCO: 23 Gew-%,
Iso 2: Prepolymer aus 8 Gew.-% Polypropylenglykol mit einer OH-Zahl von 250, 28 Gew.-% höherkernige Homologe des MDI, 61,7 Gew.-% 4,4' MDI, und 2,3 Gew.-% 2,4'-MDI mit einem NCO-Gehalt von 28,5 Gew-%
Iso 3:76 Gew.-% 4,4'-MDI, 24 Gew.-% Carbodiimid des 4,4'-MDI, Isocyanatgehalt 29,5 Gew.-%
Iso 4: Roh-MDI mit einem Gehalt an monomeren MDI-Isomeren von 39 Gew.-% und einem NCO-Gehalt von 31,3 Gew.-%

**Tabelle 1:**

| | Beispiel 1 | Beispiel 2 | | Vergl. 1 |
|---|---|---|---|---|
| Polyol 1 | 82,6 | 82,8 | | |
| Polyol 2 | 15 | 15 | | 15 |
| Polyol 3 | | | | 82,8 |
| Polyol 4 | | | | |
| Kat. 1 | 0,4 | 0,4 | | 0,4 |
| Kat. 2 | 0,8 | 0,8 | | 0,8 |
| Wasser | 1,0 | 1,0 | | 1,0 |
| Stab. | 0,2 | 0,2 | | 0,2 |
| | | | | |
| Iso 1 | 50 | 70 | | 50 |
| Iso 2 | | 30 | | |
| Iso 3 | 50 | | | 50 |
| | | | Nach Hitzealterung | |
| Härte | 4,5 kPa | 6 kPa | 5,2 kPa | Schrumpf |
| Dichte | 173 g/L | 173 g/L | 179 g/L | Schrumpf |
| | 25,8 mm | 25 mm | | Schrumpf |
| Zugfestigkeit | 109 kPa | 118 kPa | 82 kPa | Schrumpf |
| Bruchdehnung | 112 % | 99 % | 77 % | Schrumpf |
| Weiterreißfestigkeit | 0,36 N/mm | 0,30 N/mm | 0,22 N/mm | Schrumpf |
| Tan delta > 0,15 | -60°C bis 90°C | -65°C bis 50°C | -60 bis 40 °C | Schrumpf |

und die Weiterreißfestigkeit gemäß DIN ISO 34-1B(b) bestimmt. Die Tabelle zeigt, dass Schaumstoffe mit viskoelastischen Eigenschaften über einen großen Temperaturbereich erhalten werden. Weiter sind die mechanischen Eigenschaften selbst nach Hitzelagerung über 168 Stunden bei 130 °C noch sehr gut.

In Vergleichsversuchen wurde versucht, Schaumstoffe gemäß den Beispielen von DE 3942330 bei einer Dichte von mehr als 100 g/L sowie Schaumstoffe gemäß DE 3710731 nachzustellen.

In einem ersten Vergleichsversuch wurde versucht das Beispiel aus DE 3710731 nachzustellen. Dabei wurden 48 Gewichtsteile des ethylenoxidreichen Polyols 5 als Polyetherol mit einer Hydroxylzahl von 42 mg KOH/g und 6,0 Gew.-Teile Polyetherol 6 als Polyetherol mit einer Hydroxylzahl von 28 mg KOH/g eingesetzt. Die weiteren Einsatzstoffe entsprachen dem Beispiel. Als Hilfsstoffe ist in dem Beispiel der Einsatz einer Mischung aus Diethanolamin und Dibutylzinndilaurat beschrieben. Dabei ist das Mischungsverhältnis essentiell, da Diethanolamin insbesondere als Treibkatalysator wirkt und die Reaktion von Wasser und Isocyanat katalysiert, die zu CO₂-Bildung führt, während Dibutylzinndilaurat als starker Gelkatalysator die Polyurethanreaktion katalysiert. Ohne den Einsatz des Zinnkatalysators wird ein Schaumkollaps erhalten, d.h. die Treibreaktion ist beendet bevor ein ausreichendes Polyurethangerüst gebildet ist. In einem zweiten Versuch wurden als Hilfsstoffe eine Mischung aus 99,95 Gew.-% Diethanolamin und 0,05 Gew.-% Dibutylzinndilaurat eingesetzt, worauf starker Schrumpf auftrat. Hier war die Polyurethanreaktion bei einsetzender Treibreaktion schon so weit abgeschlossen, dass das Treibmittel nicht mehr aus den Zellen entweichen konnte und ein geschlossenzelliger Schaumstoff entstand. Nach Abkühlen des Schaums auf Raumtemperatur verringerte sich das Volumen des Treibmittels so stark, dass der Schaum schrumpfte. Daher wurde der Gehalt an Dibutylzinndilaurat auf 5 ppm reduziert, worauf ebenfalls ein stark geschrumpfter Schaumstoff erhalten wurde. Insgesamt war das Beispiel aus DE 3710731 nicht nachstellbar.

In einem zweiten Vergleichsbeispiel wurde Beispiel 3 aus DE 3942330 nachgestellt, wobei anstelle von 2,6 Gewichtsteilen Wasser nur 1 Gew.-Teil Wasser eingesetzt wurde. Der erhaltene Schaum war ebenfalls geschlossenzellig und stark geschrumpft.

Dies belegt, dass es für die Herstellung von viskoelastischen Schaumstoffen mit einer Dichte im Bereich zwischen 100 g/L und 300 g/L essentiell ist, die beanspruchte Kombination aus apolaren Polyolen mit hohem Anteil an primären OH-Gruppen und polarem Polyol als Polyolkomponente zusammen mit einem 4,4'-MDI haltigen Prepolymer einzusetzen, um einen verwertbaren Schaumstoff zu erhalten.

## Patentansprüche

1. Verfahren zur Herstellung von viskoelastischen Polyurethanschaumstoffen mit einer Dichte von 100 g/ dm³ bis 300 g/dm³, bei dem man
a) Polyisocyanat mit
b) polymeren Verbindungen mit gegenüber Isocyanaten reaktiven Gruppen,
c) gegebenenfalls Kettenverlängerungs- und/oder Vernetzungsmittel,
d) Katalysator,
e) Treibmittel, enthaltend Wasser, sowie gegebenenfalls
f) Zusatzstoffen
bei einem Isocyanatindex von 50 bis 95 zu einer Reaktionsmischung vermischt, die Reaktionsmischung in eine auf eine Unterlagegibt und zum Polyurethanweichschaumstoff umsetzt,
wobei das Polyisocyanat (a) einen Isocyanatgehalt von 20 bis 31,5 % aufweist und erhältlich ist durch Vermischen von 4,4'-MDI und oligomeren des Propylenoxids mit 2 bis 8 Propylenoxideinheiten, gegebenenfalls Carbodiimid des 4,4'-MDIs und gegebenenfalls höherkernige Homologe des MDI enthält und
wobei die polymeren Verbindungen mit gegenüber Isocyanaten reaktiven Gruppen (b), bezogen auf das Gesamtgewicht der polymeren Verbindungen mit gegenüber Isocyanaten reaktiven Gruppen (b),
b1) 15 bis 40 Gew.-% mindestens eines Polyalkylenoxids mit einer Hydroxylzahl von 20 bis 50 mg KOH/g, ausgehend von einem 3-funktionellen Startermolekül und einem Ethylenoxydanteil, bezogen auf den Gehalt an Alkylenoxyd, von 4 bis 10 Gew.-%, und einem Anteil an primären OH-Gruppen von 50 bis 100 %, bezogen auf die Anzahl an OH-Gruppen in der Verbindung (b1),
b2) 30 bis 70 Gew.-% mindestens eines Polyalkylenoxids mit einer Hydroxylzahl von 20 bis 50 mg KOH/g, ausgehend von einem difunktionellen Startermolekül und einem Ethylenoxydanteil, bezogen auf den Gehalt an Alkylenoxyd, von 4 bis 10 Gew.-%, und einem Anteil an primären OH-Gruppen von 50 bis 100 %, bezogen auf die Anzahl an OH-Gruppen in der Verbindung (b2),
b3) 10 bis 30 Gew.-% mindestens eines Polyalkylenoxids mit einer Hydroxylzahl von 400 bis 800 mg KOH/g, ausgehend von einem 2 bis 4-funktionellen Startermolekül und einem Ethylenoxydanteil, bezogen auf den Gehalt an Alkylenoxyd, von 80 bis 100 Gew.-% und
b4) 0 bis 30 Gew.-% eines weiteren Polyalkylenoxyds
enthalten.

2. Verfahren nach Anspruch 1, **dadurch gekennzeichnet, dass** das Gewichtsverhältnis von Komponente b1) und Komponente b2) 1 : 1,5 bis 1 : 2,5 beträgt.

3. Verfahren nach Anspruch 1 oder 2, **dadurch gekennzeichnet, dass** Polyol b1) und Polyol b2) durch Alkoxylierung einer Mischung des 3-funktionellen Starters und des 2-funktionellen Starters erhalten werden.

4. Verfahren nach einem der Ansprüche 1 bis 3, **dadurch gekennzeichnet, dass** Wasser als alleiniges Treibmittel e) eingesetzt wird.

5. Verfahren nach einem der Ansprüche 1 bis 4, **dadurch gekennzeichnet, dass** die Dichte des Polyurethanschaumstoffs 140 bis 220 g/dm³ beträgt.

6. Verfahren nach einem der Ansprüche 1 bis 5, **dadurch gekennzeichnet, dass** die Ausgangsverbindungen der Polyisocyanatkomponente a) 50 bis 90 Gew.-% 4,4'-MDI, 1 bis 15 Gew.-% Oligomere des Propylenoxids mit 2 bis 8 Propylenoxideinheiten, 0 bis 15 Gew.-% Carbodiimid es 4,4'-MDI und 0 bis 15 Gew.-% höherkernige Homologe des MDI enthält.

7. Verfahren nach Anspruch 6, **dadurch gekennzeichnet, dass** keine weiteren Isocyanatgruppenhaltigen Verbindungen in der Komponente a) enthalten sind.

8. Polyurethanschaumstoff, erhältlich nach einem Verfahren gemäß einem der Ansprüche 1 bis 7

9. Verwendung eines Polyurethanschaumstoffs nach Anspruch 8 als Matratze oder Polsterelement für Möbel oder als Dämmung von Verbrennungsmotoren.

## Claims

1. A process for producing viscoelastic polyurethane foams having a density of from 100 g/dm³ to 300 g/dm³, in which
a) polyisocyanate is mixed with
b) polymeric compounds having groups which are reactive toward isocyanates,
c) optionally chain extenders and/or crosslinkers,
d) catalyst,
e) blowing agent comprising water and optionally
f) additives
at an isocyanate index of from 50 to 95 to give a reaction mixture, the reaction mixture is placed in a on a support and reacted to give the flexible polyurethane foam,
wherein the polyisocyanate (a) has an isocyanate content of from 20 to 31.5% and is obtainable by mixing 4,4'-MDI and oligomers of propylene oxide having from 2 to 8 propylene oxide units, optionally carbodiimide of 4,4'-MDI and optionally higher homologues of MDI having more than two rings and
wherein the polymeric compounds (b) having groups which are reactive toward isocyanates comprise, based on the total weight of the polymeric compounds (b) having groups which are reactive toward isocyanates,
b1) from 15 to 40% by weight of at least one polyalkylene oxide having a hydroxyl number of from 20 to 50 mg KOH/g derived from a trifunctional starter molecule and a proportion of ethylene oxide, based on the content of alkylene oxide, of from 4 to 10% by weight and a proportion of primary OH groups of from 50 to 100%, based on the number of OH groups in compound (b1),
b2) from 30 to 70% by weight of at least one polyalkylene oxide having a hydroxyl number of from 20 to 50 mg KOH/g derived from a bifunctional starter molecule and a proportion of ethylene oxide, based on the content of alkylene oxide, of from 4 to 10% by weight and a proportion of primary OH groups of from 50 to 100%, based on the number of OH groups in compound (b2),
b3) from 10 to 30% by weight of at least one polyalkylene oxide having a hydroxyl number of from 400 to 800 mg KOH/g derived from a bifunctional to tetrafunctional starter molecule and a proportion of ethylene oxide, based on the content of alkylene oxide, of from 80 to 100% by weight and
b4) from 0 to 30% by weight of a further polyalkylene oxide.

2. The process according to claim 1, wherein the weight ratio of component b1) and component b2) is from 1:1.5 to 1:2.5.

3. The process according to claim 1 or 2, wherein polyol b1) and polyol b2) are obtained by alkoxylation of a mixture of the trifunctional starter and the bifunctional starter.

4. The process according to any of claims 1 to 3, wherein water is used as sole blowing agent e).

5. The process according to any of claims 1 to 4, wherein the density of the polyurethane foam is from 140 to 220 g/dm³.

6. The process according to any of claims 1 to 5, wherein the starting compounds of the polyisocyanate component a) comprises from 50 to 90% by weight of 4,4'-MDI, from 1 to 15% by weight of oligomers of propylene oxide having from 2 to 8 propylene oxide units, from 0 to 15% by weight of carbodiimide of 4,4'-MDI and from 0 to 15% by weight of higher homologues of MDI having more than two rings.

7. The process according to claim 6, wherein no further compounds comprising isocyanate groups are comprised in the component a).

8. A polyurethane foam obtainable by a process according to any of claims 1 to 7.

9. The use of a polyurethane foam according to claim 8 as mattress or upholstery element for furniture or as insulation of internal combustion engines.

## Revendications

1. Procédé de fabrication de mousses de polyuréthane viscoélastiques ayant une densité de 100 g/dm³ à 300 g/dm³, selon lequel
a) du polyisocyanate est mélangé avec
b) des composés polymères munis de groupes réactifs avec les isocyanates,
c) éventuellement des agents d'allongement de chaînes et/ou de réticulation,
d) un catalyseur,
e) des agents gonflants, contenant de l'eau, ainsi qu'éventuellement
f) des additifs,
à un indice d'isocyanate de 50 à 95 en un mélange réactionnel, le mélange réactionnel est introduit dans un sur un substrat et est converti en la mousse souple de polyuréthane,
le polyisocyanate (a) présentant une teneur en isocyanate de 20 à 31,5 % et pouvant être obtenu par mélange de 4,4'-MDI et d'oligomères d'oxyde de propylène munis de 2 à 8 unités oxyde de propylène, éventuellement de carbodiimide de 4,4'-MDI et éventuellement d'homologues à nombre de noyaux plus élevé de MDI, et
les composés polymères munis de groupes réactifs avec les isocyanates (b) contenant, par rapport au poids total des composés polymères munis de groupes réactifs avec les isocyanates (b) :
b1) 15 à 40 % en poids d'au moins un polyoxyde d'alkylène ayant un indice hydroxyle de 20 à 50 mg de KOH/g, partant d'une molécule de démarreur 3-fonctionnelle et d'une proportion d'oxyde d'éthylène, par rapport à la teneur en oxyde d'alkylène, de 4 à 10 % en poids et d'une proportion de groupes OH primaires de 50 à 100 %, par rapport au nombre de groupes OH dans le composé (b1),
b2) 30 à 70 % en poids d'au moins un polyoxyde d'alkylène ayant un indice hydroxyle de 20 à 50 mg de KOH/g, partant d'une molécule de démarreur difonctionnelle et d'une proportion d'oxyde d'éthylène, par rapport à la teneur en oxyde d'alkylène, de 4 à 10 % en poids et d'une proportion de groupes OH primaires de 50 à 100 %, par rapport au nombre de groupes OH dans le composé (b2),
b3) 10 à 30 % en poids d'au moins un polyoxyde d'alkylène ayant un indice hydroxyle de 400 à 800 mg de KOH/g, partant d'une molécule de démarreur 2 à 4-fonctionnelle et d'une proportion d'oxyde d'éthylène, par rapport à la teneur en oxyde d'alkylène, de 80 à 100 % en poids, et
b4) 0 à 30 % en poids d'un polyoxyde d'alkylène supplémentaire.

2. Procédé selon la revendication 1, **caractérisé en ce que** le rapport en poids entre le composant b1) et le composant b2) est de 1:1,5 à 1:2,5.

3. Procédé selon la revendication 1 ou 2, **caractérisé en ce que** le polyol b1) et le polyol b2) sont obtenus par alcoxylation d'un mélange du démarreur 3-fonctionnel et du démarreur 2-fonctionnel.

4. Procédé selon l'une quelconque des revendications 1 à 3, **caractérisé en ce que** de l'eau est utilisée en tant qu'agent gonflant unique e).

5. Procédé selon l'une quelconque des revendications 1 à 4, **caractérisé en ce que** la densité de la mousse de polyuréthane est de 140 à 220 g/dm³.

6. Procédé selon l'une quelconque des revendications 1 à 5, **caractérisé en ce que** les composés de départ du composant polyisocyanate a) contient 50 à 90 % en poids de 4,4'-MDI, 1 à 15 % en poids d'oligomères d'oxyde de propylène munis de 2 à 8 unités oxyde de propylène, 0 à 15 % en poids de carbodiimide de 4,4'-MDI et 0 à 15 % en poids d'homologues à nombre de noyaux plus élevé de MDI.

7. Procédé selon la revendication 6, **caractérisé en ce qu'**aucun composé contenant des groupes isocyanate supplémentaire n'est contenu dans le composant a).

8. Mousse de polyuréthane, pouvant être obtenue par un procédé selon l'une quelconque des revendications 1 à 7.

9. Utilisation d'une mousse de polyuréthane selon la revendication 8 en tant que matelas ou élément de rembourrage pour meubles ou en tant qu'isolation de moteurs à combustion.
